# FASCICULE DE BREVET EUROPEEN

(11) **EP 0 920 717 B1**
(45) Date de publication et mention de la délivrance du brevet: **17.08.2005**
(21) Numéro de dépôt: 98932241.7
(22) Date de dépôt: 19.06.1998
(51) Int. Cl.: H01S 3/06, G02B 6/34

(54) **SYSTEME D'AMPLIFICATION OPTIQUE BIDIRECTIONNEL**
BIDIREKTIONALES OPTISCHES VERSTÄRKUNGSSYSTEM
BI-DIRECTIONAL OPTICAL AMPLIFICATION SYSTEM

(30) Priorité: 20.06.1997 FR 9707708
(43) Date de publication de la demande: 09.06.1999
(73) Titulaire: Thales, 75008 Paris (FR)
(72) Inventeur: D'AURIA, Luigi Thomson-CSF Propriété Intellect., F-94117 Arcueil Cedex (FR); MONGARDIEN, Dominique Thomson-CSF Propriété Intel., F-94117 Arcueil Cedex (FR); RICHIN, Philippe Thomson-CSF Propriété Intellect., F-94117 Arcueil Cedex (FR)
(74) Mandataire: Lucas, Laurent
(86) Numéro de dépôt international: PCT/FR1998/001293
(87) Numéro de publication internationale: WO 1998/059398

(56) Documents cités:
- EP-A- 0 724 314
- US-A- 5 452 124
- PATENT ABSTRACTS OF JAPAN vol. 097, no. 005, 30 mai 1997 & JP 09 026525 A (SUMITOMO ELECTRIC IND LTD), 28 janvier 1997 & DATABASE WPI Week 9714 Derwent Publications Ltd., London, GB; AN 97-150886

## Description

L'invention concerne un système d'amplification optique bidirectionnel et notamment un système permettant de transmettre par un même guide optique des ondes optiques dans les deux sens et de les amplifier.

Ce système s'applique notamment aux transmission sur fibres optiques monomodes utilisant des amplificateurs à fibre dopée. Il permet de rendre un amplificateur optique intrinsèquement monodirectionnel en un amplificateur bidirectionnel. Toute transmission optique existante monodirectionnelle pourra ainsi être transformée simplement, rapidement et à peu de frais en transmission bidirectionnelle multicanaux.

Le dispositif fait appel à des technologies existantes ; il est monobloc et aisément insérable, par simple déconnexion et reconnexion des amplificateurs optiques, dans une transmission optique.

Les domaines d'application sont principalement les télécommunications et les réseaux de distribution par fibres optiques.

Les transmissions par fibres optiques font de plus en plus appel aux amplificateurs optiques à fibre dopée en remplacement des répéteurs antérieurement utilisés et au multiplexage en longueur d'onde pour multiplier le nombre de canaux véhiculables dans une même fibre (voir brevet français n° 2 258 751).

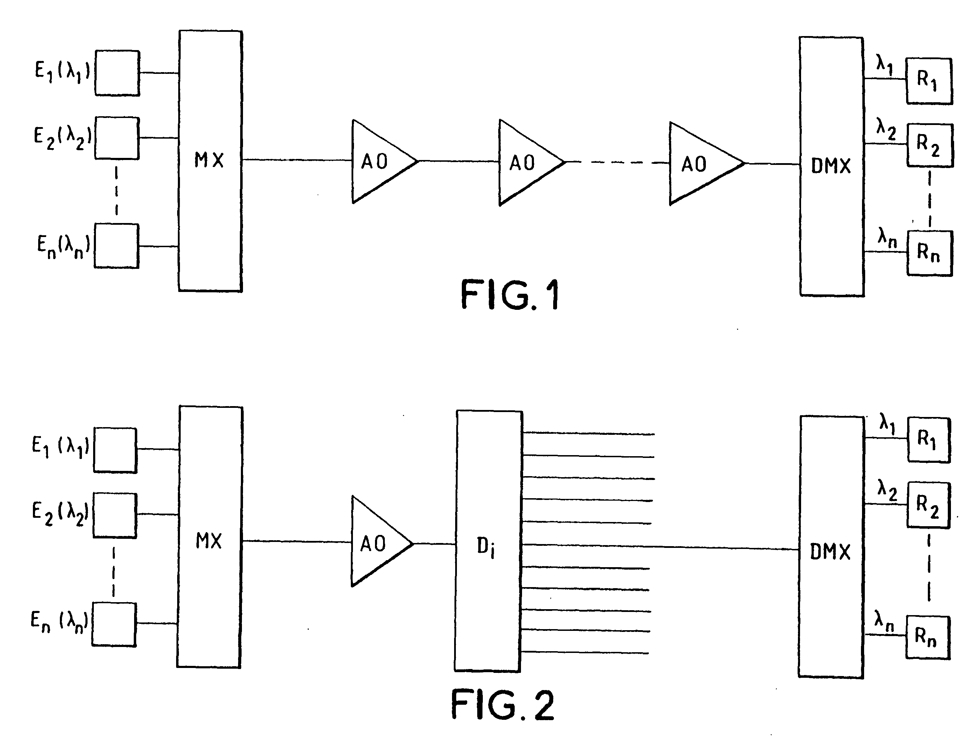

Les figures 1 et 2 montrent les schémas des transmissions optiques actuellement utilisés dans les domaines des télécommunications et des réseaux de distribution.

Les transmissions en sens inverse se font habituellement en doublant les lignes de transmission.

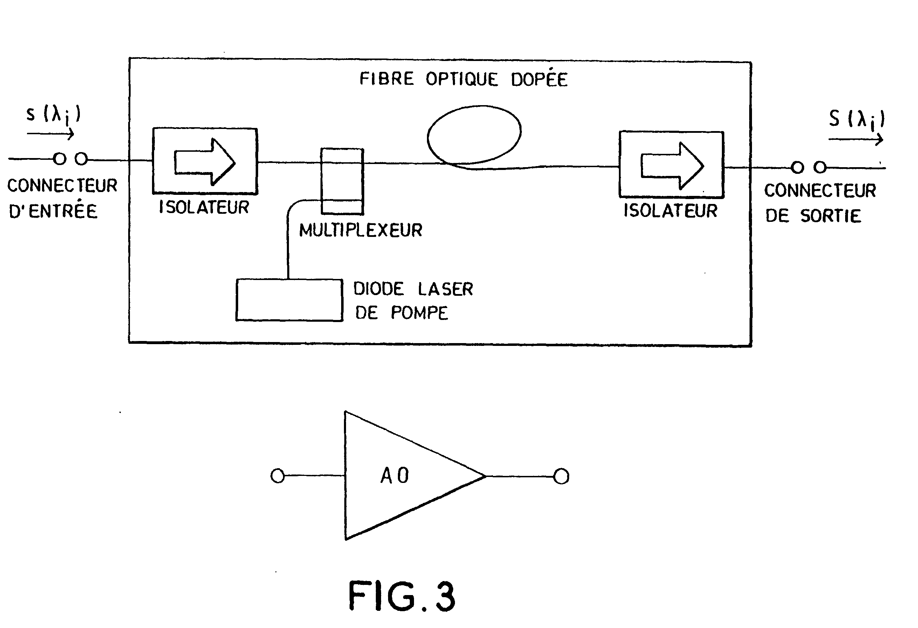

Les amplificateurs optiques à fibre dopée usuellement utilisés, tel que celui représenté sur la figure 3, sont monodirectionnels du fait de leur conception et de la présence d'isolateurs optiques ; ils ne permettent donc pas la réalisation de transmissions bidirectionnelles basées sur le multiplexage optique.

L'invention est définie dans les revendications 1 et 2. Elle concerne un système réalisant une telle transmission bidirectionnelle; où un système d'amplification optique bidirectionnel comprenant un amplificateur optique possédant une entrée et une sortie et permettant d'amplifier des longueurs d'ondes comprises dans une première gamme de longueurs d'ondes, comportant un dispositif de couplage optique possédant :
- un premier accès prévu pour recevoir une première onde optique dans une deuxième gamme de longueurs d'ondes comprise dans la première gamme de longueurs d'ondes ;
- un deuxième accès prévu pour recevoir une deuxième onde optique dans une troisième gamme de longueurs d'ondes également comprise dans la première gamme de longueurs d'ondes ;
- une sortie couplée à l'entrée de l'amplificateur optique ;
- une entrée couplée à la sortie de l'amplificateur optique ;
   ledit dispositif permettant :
- de diriger la première onde optique (sλ₁) du premier accès à la sortie du dispositif ;
- de diriger l'onde optique amplifiée résultant de l'amplification de la première onde optique, de l'entrée du dispositif de couplage au deuxième accès ;
- de diriger la deuxième onde optique du deuxième accès à la sortie du dispositif de couplage ;
- de diriger l'onde optique amplifiée résultant de l'amplification de la deuxième onde optique, de l'entrée du dispositif de couplage au première accès.

Le document US-A-5,452,124 concerne un système d'amplification optique bidirectionnelle dans lequel le couplage se fait grâce à un ensemblre de lentilles de type SELFOC, réalisant la fonction de filtrage dichroïque .

Les différents objets et caractéristiques de l'invention apparaîtront plus clairement dans la description qui va suivre et dans les figures annexées qui représentent :
- les figures 1 à 3, des systèmes connus dans la technique et décrits précédemment ;
- la figure 4, un spectre de transmission en longueurs d'ondes du système de l'invention ;
- les figures 5a et 5b, un schéma général du système de l'invention ;
- les figures 6, 7a et 7b, des exemples de réalisation détaillés selon l'invention.

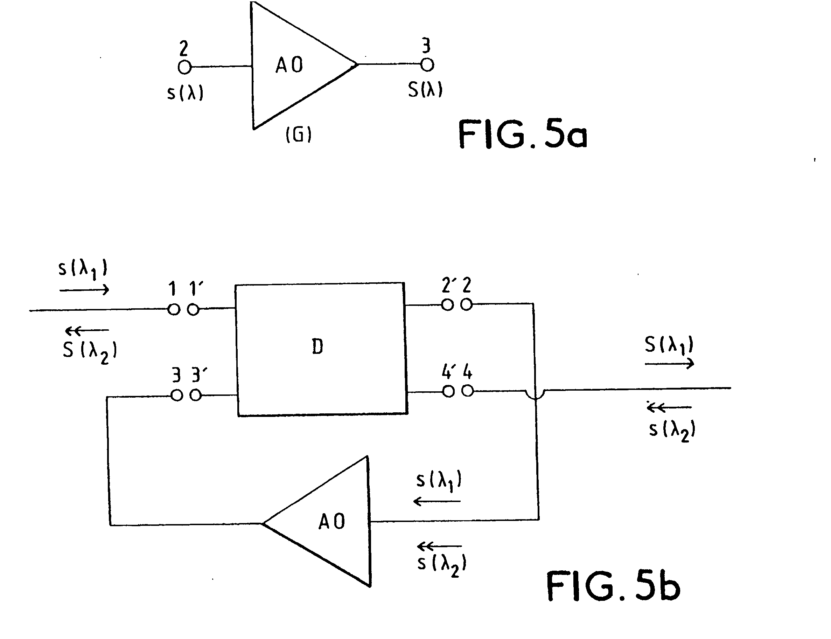

En se reportant à la figure 5, on va donc décrire tout d'abord un schéma général du système de l'invention.

On note tout d'abord que les amplificateurs optiques à fibre dopée présentent une certaine largeur spectrale d'amplification optique qui permet d'amplifier simultanément plusieurs canaux copropagatifs portés par des longueurs d'onde différentes entrant dans cette largeur spectrale et préalablement multiplexés optiquement dans la même fibre.

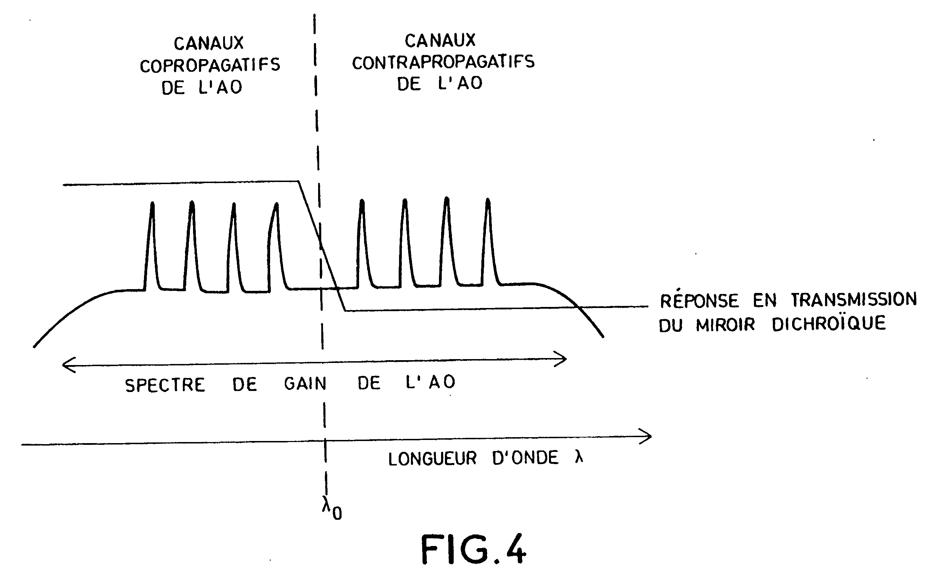

Selon l'invention, on alloue une partie du spectre de l'amplificateur pour transmettre des signaux se propageant dans le sens de l'amplificateur optique et l'autre partie pour transmettre des signaux contrapropagatifs comme cela est représenté en figure 4.

Le système de l'invention comporte un amplificateur optique AO, tel que celui de la figure 5a, qui possède un gain G et qui transforme un signal entrant de longueur d'onde λ, s(λ) en un signal sortant amplifié S (λ). L'amplificateur AO possède une fibre optique amorce d'entrée d'extrémité 2 et une fibre amorce de sortie d'extrémité 3.

Le système de l'invention (figure 5b) possède en outre un dispositif de commutation D qui possède quatre entrées/sorties 1', 2', 3', 4'. Les accès 1' et 4' sont reliées aux circuits de transmission extérieurs (aux fibres de transmission notamment).

Les accès 2' et 3' sont reliées respectivement aux accès 2 et 3 de l'amplificateur AO.

Le rôle de D est de :
- diriger le signal s(λ₁) issu de l'accès 1 vers l'entrée 2 de l'amplificateur AO ;
- diriger le signal amplifié S (λ₁) issu de la sortie 3 vers l'accès 4 de la fibre de transmission ;
- diriger un signal contrapropagatif, de longueur d'onde λ₂, s(λ₂) issu de l'accès 4 vers l'entrée 2 de l'amplificateur AO ;
- diriger le signal amplifié S (λ₂) issu de la sortie 3 vers l'entrée 1 de la fibre de transmission.

Le dispositif D permet donc d'utiliser le même amplificateur monodirectionnel AO pour amplifier 2 signaux contrapropagatifs portés respectivement par les longueurs d'onde λ₁ et λ₂.

Lié à cela, le dispositif D permet d'utiliser le même amplificateur optique monodirectionnel AO pour amplifier deux ensembles de signaux contrapropagatifs portés par des longueurs d'ondes situées dans le spectre de gain de AO respectivement de part et d'autre d'une longueur d'onde λ₀ (voir figure 4).

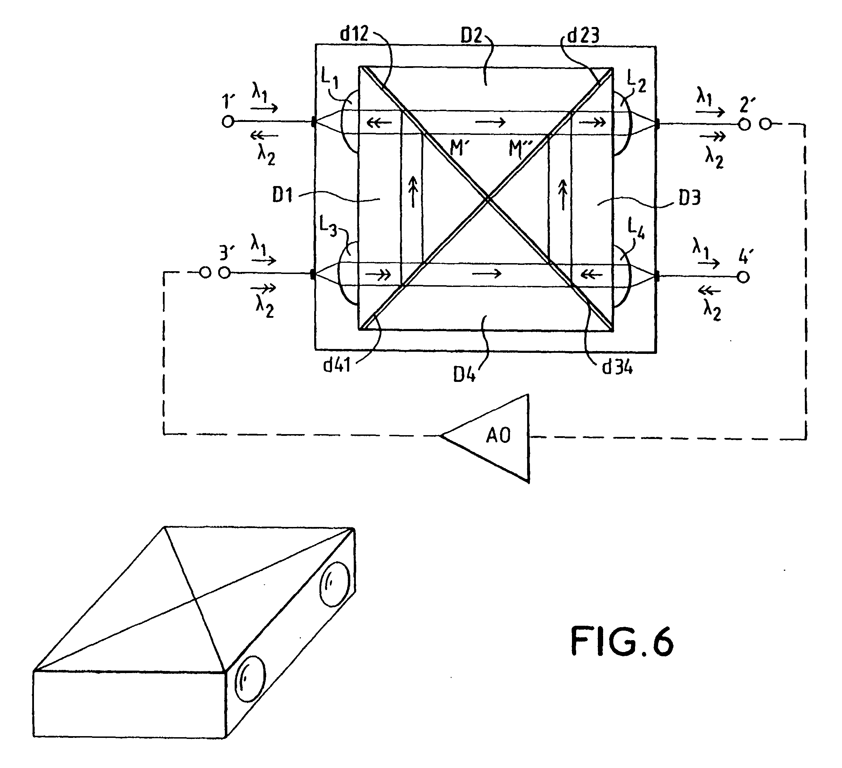

Une première version du dispositif est représentée sur la figure 6. Il est constitué d'un parallélépipède rectangle transparent de section carrée, réalisé par assemblage de quatre parallélépipèdes rectangles D1, D2, D3, D4 ayant chacun comme section un triangle isocèle rectangle. Les faces internes d12 à d41 sont traitées de façon à constituer des miroirs dichroïques centrés sur une longueur d'onde λ₀ (voir figure 4).

Par exemple, sur un tel miroir, tout rayonnement de longueur d'onde inférieure à λ₀ sera transmis et tout rayonnement de longueur d'onde supérieure à λ₀ sera réfléchi. Quatre lentilles L1, L2, L3 et L4 sont disposées selon la figure 6 sur 2 faces opposées. Leur rôle est de collimater les faisceaux issus des accès 1', 2', 3' et 4' ou en sens inverse de focaliser les faisceaux collimatés sur les accès (constitués par exemple des coeurs de fibres optiques).

Le rayonnement à la longueur d'onde λ₁ (<λ₀) entrant sur l'accès 1' est collimaté par la lentille L1, transmis à travers les faces dichroïques d12 et d23 et focalisé par la lentille L2 dans la fibre d'extrémité de l'accès 2'.

Après amplification par AO, ce rayonnement, propagé par la fibre d'extrémité 3', est collimaté par la lentille L3, transmis par les faces dichroïques d41 et d34 et focalisé par la lentille L4 dans la fibre d'extrémité 4'.

Le rayonnement de longueur d'onde λ₂ (>λ₀) entrant sur l'accès 4', est collimaté par la lentille L4, réfléchi successivement par les faces dichroïques d34 et d23 (placées à 45° par rapport au faisceau collimaté) et focalisé par la lentille L2 dans la fibre d'extrémité 2'.

Après amplification par AO, ce rayonnement propagé par la fibre d'extrémité 3' est collimaté par la lentille L3, réfléchi successivement par les faces dichroïques d41 et d12 (placées à 45° par rapport au faisceau collimaté) et focalisé dans la fibre d'extrémité de l'accès 1'.

Les rayonnements de longueur d'onde λ₁ et λ₂ sont donc comme prévu contrapropagatifs en amont et en aval de l'ensemble du dispositif D et de l'amplificateur AO et copropagatifs lors de la traversée de ce dernier.

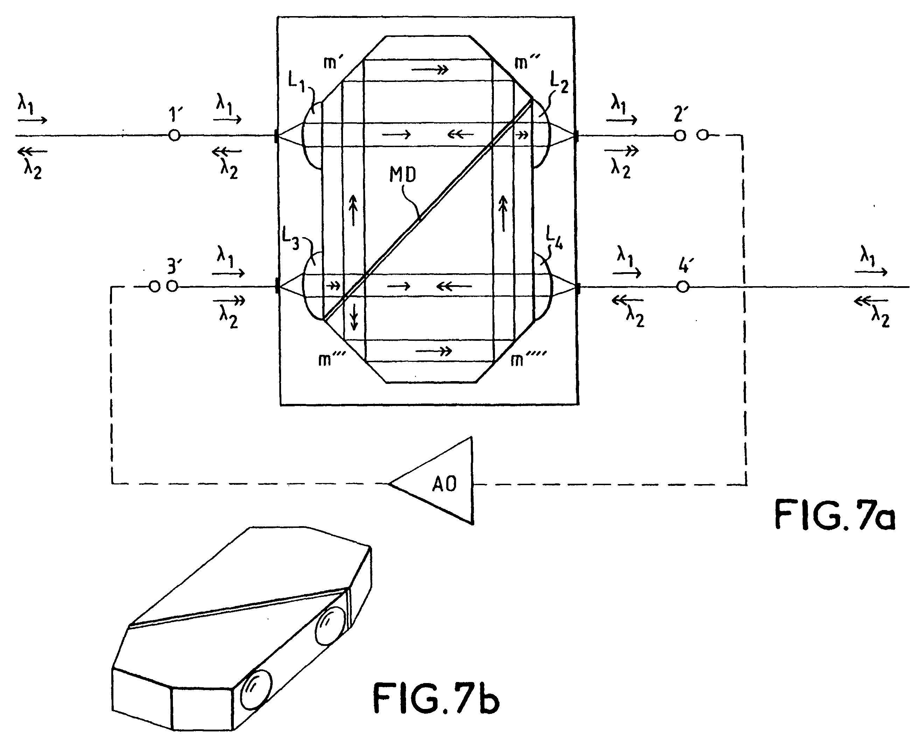

Une variante du dispositif D est représentée sur la figure 7. Il a la forme d'un parallélépipède rectangle de section octogonale constitué de deux blocs symétriques assemblés par la face diagonale dichroïque MD centrée sur la longueur d'onde λ₀. Les faces m', m", m'" et m"" sont réfléchissantes. Comme dans le cas précédent :
- Le rayonnement de longueur d'onde λ₁ (<λ₀) propagé par la fibre d'extrémité 1' est collimaté par la lentille L1, transmis par la face dichroïque MD et focalisé par la lentille L2 dans la fibre d'extrémité de l'accès 2'.
- Après amplification par AO, ce rayonnement propagé par la fibre d'extrémité 3', est collimaté par la lentille L3, transmis à travers la face dichroïque MD et est focalisé par la lentille L4 dans la fibre d'extrémité de l'accès 4' ;
- Le rayonnement de longueur d'onde λ₂ (>λ₀) issu de la fibre d'extrémité de l'accès 4' est collimaté par la lentille L4 réfléchi successivement sur la face dichroïque MD, les miroirs m'" et m"", de nouveau la face MD (toutes les réflexions se font avec un angle de 45° sur la figure 7) et focalisé par la lentille L2 dans la fibre d'extrémité de l'accès 2' ;
- Après amplification par AO, ce rayonnement propagé par la fibre d'extrémité 3' est collimaté par la lentille L3, réfléchi successivement par la face de MD, les miroirs m' et m", de nouveau la face MD et focalisé par la lentille L1 dans la fibre d'extrémité de l'accès 1'.

Comme précédemment, les rayonnements de longueur d'onde λ₁ et λ₂ sont contrapropagatifs en amont et en aval de l'ensemble du dispositif D et de l'amplificateur AO et copropagatifs lors de la traversée de ce dernier.

### Avantages du système de l'invention :

La fonction transformant un amplificateur optique monodirectionnel en un amplificateur bidirectionnel est effectuée par un dispositif :
- unique
- monobloc
- faisant appel à des technologies optiques connues (fabrication collective des prismes et des faces dichroïques, collimation des faisceaux issus de fibres optiques utilisée en connectique)

Le dispositif proposé peut être inséré simplement dans des transmissions et réseaux existants et permet d'accroître, à faible coût, leur fonctionnalité. Il permet, par ailleurs, de concevoir de nouvelles architectures de réseaux nécessitant des transmissions bidirectionnelles.

## Revendications

1. Système d'amplification optique bidirectionnel comprenant un amplificateur optique (AO) possédant une entrée (2) et une sortie (3) et permettant d'amplifier des longueurs d'ondes comprises dans une première gamme de longueurs d'ondes, comportant un dispositif de couplage optique (D) possédant :
- un premier accès (1') prévu pour recevoir une première onde optique (sλ₁) dans une deuxième gamme de longueurs d'ondes comprise dans la première gamme de longueurs d'ondes ;
- un deuxième accès (4') prévu pour recevoir une deuxième onde optique (sλ₂) dans une troisième gamme de longueurs d'ondes également comprise dans la première gamme de longueurs d'ondes ;
- une sortie (2') couplée à l'entrée (2) de l'amplificateur optique (AO) ;
- une entrée (3') couplée à la sortie (3) de l'amplificateur optique (AO);
ledit dispositif permettant :
- de diriger la première onde optique (sλ₁) du premier accès (1') à la sortie (2') du dispositif ;
- de diriger l'onde optique amplifiée (Sλ₁) résultant de l'amplification de la première onde optique, de l'entrée (3') du dispositif de couplage au deuxième accès (4');
- de diriger la deuxième onde optique (sλ₂) du deuxième accès (4') à la sortie (2') du dispositif de couplage ;
- de diriger l'onde optique amplifiée (Sλ₂) résultant de l'amplification de la deuxième onde optique, de l'entrée (3') du dispositif de couplage au première accès (1'),
**caractérisé en ce que** le dispositif de couplage comporte quatre prismes trièdres rectangles (D1, D2, D3, D4) assemblés par leurs faces formant un angle dièdre rectangle, les interfaces (d12, d23, d34, d41) entre ces faces comportant des moyens de réflexion des ondes de la troisième gamme de longueurs d'ondes ;
- la lumière émise par le premier accès (1') dans le dispositif de couplage traversant deux interfaces étant dirigée selon un premier trajet vers la sortie (2') couplée à l'entrée (2) de l'amplificateur (AO) ;
- la lumière émise par le deuxième accès (4') dans le dispositif de couplage étant dirigée selon un deuxième trajet parallèle au premier trajet et étant réfléchie par un premier interface puis un deuxième interface pour être dirigée selon le premier trajet vers la sortie (2') ;
- la lumière émise par l'amplificateur (AO) à l'entrée (3') du dispositif de couplage est dirigée selon le deuxième trajet.

2. Système d'amplification optique bidirectionnel comprenant un amplificateur optique (AO) possédant une entrée (2) et une sortie (3) et permettant d'amplifier des longueurs d'ondes comprises dans une première gamme de longueurs d'ondes, comportant un dispositif de couplage optique (D) possédant :
- un premier accès (1') prévu pour recevoir une première onde optique (sλ₁) dans une deuxième gamme de longueurs d'ondes comprise dans la première gamme de longueurs d'ondes ;
- un deuxième accès (4') prévu pour recevoir une deuxième onde optique (sλ₂) dans une troisième gamme de longueurs d'ondes également comprise dans la première gamme de longueurs d'ondes ;
- une sortie (2') couplée à l'entrée (2) de l'amplificateur optique (AO) ;
- une entrée (3') couplée à la sortie (3) de l'amplificateur optique (AO) ;
ledit dispositif permettant :
- de diriger la première onde optique (sλ₁) du premier accès (1') à la sortie (2') du dispositif ;
- de diriger l'onde optique amplifiée (Sλ₁) résultant de l'amplification de la première onde optique, de l'entrée (3') du dispositif de couplage au deuxième accès (4');
- de diriger la deuxième onde optique (sλ₂) du deuxième accès (4') à la sortie (2') du dispositif de couplage ;
- de diriger l'onde optique amplifiée (Sλ₂) résultant de l'amplification de la deuxième onde optique, de l'entrée (3') du dispositif de couplage au première accès (1'),
**caractérisé en ce que** le dispositif de couplage comporte :
- un miroir dichroïque (MD) réfléchissant la lumière de la troisième gamme de longueurs d'ondes et ne réfléchissant pas la lumière de la deuxième gamme de longueurs d'ondes le premier accès dirigeant la lumière de la deuxième gamme de longueurs d'ondes selon un troisième trajet vers ladite sortie (2') en traversant le miroir dichroïque et ladite entrée (3') dirigeant la lumière vers le deuxième accès à travers le miroir dichroïque selon un quatrième trajet, le deuxième accès dirigeant la lumière de la troisième longueur d'onde vers le miroir dichroïque selon le quatrième trajet ;
- un premier système de miroirs (m'", m'"') recevant la lumière provenant du deuxième accès après réflexion par le miroir dichroïque (MD) et la réfléchissant vers le miroir dichroïque de façon que celui-ci la réfléchisse vers ladite sortie (2') selon le troisième trajet ;
- un deuxième système de miroirs (m', m") recevant la lumière provenant de ladite entrée (3') après réflexion par le miroir dichroïque (MD) et la réfléchissant vers le miroir dichroïque de façon que celui-ci la réfléchisse vers le premier accès (1') selon le quatrième trajet.

3. Système selon la revendication 2, **caractérisé en ce qu'**il comporte un bloc en matériau transparent de forme octogonale constitué de deux blocs symétriques assemblés par une face diagonale réalisant le miroir dichroïque, les deux systèmes de miroirs (m' à m'''') comportant des faces réalisant ladite forme octogonale.

## Patentansprüche

1. Bidirektionales optisches Verstärkungssystem mit einem optischen Verstärker (AO), der einen Eingang (2) und einen Ausgang (3) aufweist und es ermöglicht, Wellenlängen zu verstärken, die in einem ersten Wellenlängenbereich enthalten sind, mit einer optischen Koppelvorrichtung (D), die aufweist:
- einen ersten Zugang (1'), der vorgesehen ist, um eine erste optische Welle (sλ₁) in einem zweiten Wellenlängenbereich zu empfangen, der im ersten Wellenlängenbereich enthalten ist;
- einen zweiten Zugang (4'), der vorgesehen ist, um eine zweite optische Welle (sλ₂) in einem dritten Wellenlängenbereich zu empfangen, der ebenfalls im ersten Wellenlängenbereich enthalten ist;
- einen Ausgang (2'), der mit dem Eingang (2) des optischen Verstärkers (AO) gekoppelt ist;
- einen Eingang (3'), der mit dem Ausgang (3) des optischen Verstärkers (AO) gekoppelt ist;
wobei die Vorrichtung es ermöglicht:
- die erste optische Welle (sλ₁) vom ersten Zugang (1') zum Ausgang (2') der Vorrichtung zu lenken;
- die aus der Verstärkung der ersten optischen Welle entstandene verstärkte optische Welle (Sλ₁) vom Eingang (3') der Koppelvorrichtung zum zweiten Zugang (4') zu lenken;
- die zweite optische Welle (sλ₂) vom zweiten Zugang (4') zum Ausgang (2') der Koppelvorrichtung zu lenken;
- die aus der Verstärkung der zweiten optischen Welle entstandene verstärkte optische Welle (Sλ₂) vom Eingang (3') der Koppelvorrichtung zum ersten Zugang (1') zu lenken,
**dadurch gekennzeichnet, dass** die Koppelvorrichtung vier rechtwinklige dreiflächige Prismen (D1, D2, D3, D4) aufweist, die an ihren einen rechtwinkligen Flächenwinkel bildenden Flächen zusammengesetzt sind, wobei die Schnittstellen (d12, d23, d34, d41) zwischen diesen Flächen Reflexionsmittel für die Wellen des dritten Wellenlängenbereichs aufweisen;
- wobei das vom ersten Zugang (1') in die Koppelvorrichtung gesendete Licht zwei Schnittstellen durchquert und gemäß einer ersten Strecke zum Ausgang (2') gelenkt wird, der mit dem Eingang (2) des Verstärkers (AO) gekoppelt ist;
- wobei das vom zweiten Zugang (4') in die Koppelvorrichtung gesendete Licht gemäß einer zweiten Strecke parallel zur ersten Strecke gelenkt und von einer ersten Schnittstelle und dann von einer zweiten Schnittstelle reflektiert wird, um gemäß der ersten Strecke zum Ausgang (2') gelenkt zu werden;
- wobei das vom Verstärker (AO) an den Ausgang (3') der Koppelvorrichtung gesendete Licht gemäß der zweiten Strecke gelenkt wird.

2. Bidirektionales optisches Verstärkungssystem mit einem optischen Verstärker (AO), der einen Eingang (2) und einen Ausgang (3) aufweist und es ermöglicht, Wellenlängen zu verstärken, die in einem ersten Wellenlängenbereich enthalten sind, mit einer optischen Koppelvorrichtung (D), die aufweist:
- einen ersten Zugang (1'), der vorgesehen ist, um eine erste optische Welle (sλ₁) in einem zweiten Wellenlängenbereich zu empfangen, der im ersten Wellenlängenbereich enthalten ist;
- einen zweiten Zugang (4'), der vorgesehen ist, um eine zweite optische Welle (sλ₂) in einem dritten Wellenlängenbereich zu empfangen, der ebenfalls im ersten Wellenlängenbereich enthalten ist;
- einen Ausgang (2'), der mit dem Eingang (2) des optischen Verstärkers (AO) gekoppelt ist;
- einen Eingang (3'), der mit dem Ausgang (3) des optischen Verstärkers (AO) gekoppelt ist;
wobei die Vorrichtung es ermöglicht:
- die erste optische Welle (sλ₁) vom ersten Zugang (1') zum Ausgang (2') der Vorrichtung zu lenken;
- die aus der Verstärkung der ersten optischen Welle entstandene verstärkte optische Welle (Sλ₁) vom Eingang (3') der Koppelvorrichtung zum zweiten Zugang (4') zu lenken;
- die zweite optische Welle (Sλ₂) vom zweiten Zugang (4') zum Ausgang (2') der Koppelvorrichtung zu lenken;
- die aus der Verstärkung der zweiten optischen Welle entstandene verstärkte optische Welle (Sλ₂) vom Eingang (3') der Koppelvorrichtung zum ersten Zugang (1') zu lenken,
**dadurch gekennzeichnet, dass** die Koppelvorrichtung aufweist:
- einen dichroitischen Spiegel (MD), der das Licht des dritten Wellenlängenbereichs reflektiert und nicht das Licht des zweiten Wellenlängenbereichs reflektiert, wobei der erste Zugang das Licht des zweiten Wellenlängenbereichs gemäß einer dritten Strecke zum Ausgang (2') lenkt, indem es den dichroitischen Spiegel durchquert, und der Eingang (3') das Licht gemäß einer vierten Strecke durch den dichroitischen Spiegel zum zweiten Zugang lenkt, wobei der zweite Zugang das Licht des dritten Wellenlängenbereichs gemäß der vierten Strecke zum dichroitischen Spiegel lenkt;
- ein erstes System von Spiegeln (m"', m""), das das vom zweiten Zugang kommende Licht nach Reflexion durch den dichroitischen Spiegel (MD) empfängt und es derart zum dichroitischen Spiegel reflektiert, dass dieser es gemäß der dritten Strecke zum Ausgang (2') reflektiert;
- ein zweites System von Spiegeln (m', m"), das das vom Eingang (3') nach der Reflexion durch den dichroitischen Spiegel (MD) kommende Licht empfängt und es derart zum dichroitischen Spiegel reflektiert, dass dieser es gemäß der vierten Strecke zum ersten Zugang (1') reflektiert.

3. System nach Anspruch 2, **dadurch gekennzeichnet, dass** es einen Block aus durchsichtigem Material von achteckiger Form aufweist, der aus zwei symmetrischen Blöcken besteht, die an einer diagonalen Fläche zusammengebaut sind, die den dichroitischen Spiegel bildet, wobei die beiden Spiegelsysteme (m' bis m"") Flächen aufweisen, die die Achteckform bilden.

## Claims

1. Bidirectional optical amplification system comprising an optical amplifier (AO) possessing an input (2) and an output (3) and making it possible to amplify wavelengths lying within a first range of wavelengths, comprising an optical coupling device (D) possessing:
- a first port (1') designed to receive a first optical wave (sλ₁) in a second range of wavelengths lying within the first range of wavelengths;
- a second port (4') designed to receive a second optical wave (sλ₂) in a third range of wavelengths also lying within the first range of wavelengths;
- an output (2') coupled to the input (2) of the optical amplifier (AO);
- an input (3') coupled to the output (3) of the optical amplifier (AO);
the said device making it possible:
- to direct the first optical wave (sλ₁) from the first port (1') to the output (2') of the device;
- to direct the amplified optical wave (Sλ₁) resulting from the amplification of the first optical wave, from the input (3') of the coupling device to the second port (4');
- to direct the second optical wave (sλ₂) from the second port (4') to the output (2') of the coupling device;
- to direct the amplified optical wave (Sλ₂) resulting from the amplification of the second optical wave, from the input (3') of the coupling device to the first port (4'),
**characterized in that** the coupling device comprises four right-angled trihedral prisms (D1, D2, D3, D4) joined together via their faces which form a right-angled dihedral angle, the interfaces (d12, d23, d34, d41) between these faces comprising means for reflecting the waves of the third range of wavelengths;
- the light emitted by the first port (1') in the coupling device passing through two interfaces being directed along a first path towards the output (2') coupled to the input (2) of the amplifier (AO);
- the light emitted by the second port (4') in the coupling device being directed along a second path parallel to the first path and being reflected by a first interface and then a second interface so as to be directed along the first path towards the output (2');
- the light emitted by the amplifier (AO) to the input (3') of the coupling device is directed along the second path.

2. Bidirectional optical amplification system comprising an optical amplifier (AO) possessing an input (2) and an output (3) and making it possible to amplify wavelengths lying within a first range of wavelengths, comprising an optical coupling device (D) possessing:
- a first port (1') designed to receive a first optical wave (sλ₁) in a second range of wavelengths lying within the first range of wavelengths;
- a second port (4') designed to receive a second optical wave (sλ₂) in a third range of wavelengths also lying within the first range of wavelengths;
- an output (2') coupled to the input (2) of the optical amplifier (AO);
- an input (3') coupled to the output (3) of the optical amplifier (AO);
the said device making it possible:
- to direct the first optical wave (sλ₁) from the first port (1') to the output (2') of the device;
- to direct the amplified optical wave (Sλ₁) resulting from the amplification of the first optical wave, from the input (3') of the coupling device to the second port (1');
- to direct the second optical wave (sλ₂) from the second port (4') to the output (2') of the coupling device;
- to direct the amplified optical wave (Sλ₂) resulting from the amplification of the second optical wave, from the input (3') of the coupling device to the first port (1'), **characterized in that** the coupling device comprises:
- a dichroic mirror (MD) reflecting the light from the third range of wavelengths and not reflecting the light from the second range of wavelengths the first port directing the light of the second range of wavelengths along a third path towards the said output (2') while passing through the dichroic mirror and the said input (3') directing the light towards the second port through the dichroic mirror along a fourth path, the second port directing the light of the third wavelength towards the dichroic mirror along the fourth path;
- a first system of mirrors (m''', m'''') receiving the light originating from the second port after reflection by the dichroic mirror (MD) and reflecting it towards the dichroic mirror in such a way that the latter reflects it towards the said output (2') along the third path;
- a second system of mirrors (m', m'') receiving the light originating from the said input (3') after reflection by the dichroic mirror (MD) and reflecting it towards the dichroic mirror in such a way that the latter reflects it towards the first port (1') along the fourth path.

3. System according to Claim 2, **characterized in that** it comprises a block of transparent material of octagonal shape consisting of two symmetrical blocks joined together via a diagonal face producing the dichroic mirror, the two systems of mirrors (m' to m'''') comprising faces producing the said octagonal shape.
